# EUROPÄISCHE PATENTSCHRIFT

(11) **EP 1 559 936 B1**
(45) Veröffentlichungstag und Bekanntmachung des Hinweises auf die Patenterteilung: **13.12.2006**
(21) Anmeldenummer: 04027148.8
(22) Anmeldetag: 16.11.2004
(51) Int. Cl.: F16K 1/44, F16K 31/06

(54) **Magnetventil**
Magnetic valve
Vanne magnétique

(30) Priorität: 30.01.2004 DE 102004004708
(43) Veröffentlichungstag der Anmeldung: 03.08.2005
(73) Patentinhaber: Karl Dungs GmbH & Co.KG, 73660 Urbach (DE)
(72) Erfinder: Berger, Siegfried, 73278 Schlierbach (DE); Forster, Joachim, 71364 Winnenden (DE)
(74) Vertreter: Rüger, Barthelt & Abel Patentanwälte

(56) Entgegenhaltungen:
- EP-A- 0 757 200
- EP-A- 0 978 688
- EP-A- 1 084 358
- DE-A1- 10 306 003
- US-A- 6 148 862

## Beschreibung

Die Erfindung betrifft eine Ventilanordnung, insbesondere für sicherheitsrelevante Gasanwendungen.

Für gasbetriebene Geräte werden häufig Ventile benötigt, die elektrisch zu öffnen sind und im stromlosen Fall mit Sicherheit schließen. Um die gewünschte Sicherheit gegen Fehlfunktionen von Teilen des Ventils zu erreichen, werden in der Regel im Gasstrom zwei Ventile hintereinander angeordnet, die unabhängig voneinander öffnen und schließen können. Bleibt eines der Ventile in Offenstellung hängen, schließt dann immer noch das andere, was das Abschalten der Ventilanordnung, d.h. das Schließen derselben sicherstellt.

Es sind auch Doppelsitzventilanordnungen bekannt geworden, bei denen beide Ventile und die zugehörigen Magnetantriebe miteinander baulich vereinigt sind. Beispielsweise offenbart die EP 0 757 200 B1 ein solches Doppelsitzventil mit zwei koaxial und im axialen Abstand zueinander angeordneten Ventilsitzen, denen jeweils ein eigenes Ventilverschlussglied zugeordnet ist. Zum Öffnen der beiden voneinander unabhängigen Ventilverschlussglieder dient ein Magnetantrieb mit einer einzigen Magnetspule und einem äußeren Magnetkreis. Diesem sind zwei Anker zugeordnet, von denen einer hohlzylindrisch (mit geschlossenem oberen Ende) und der andere als Zylinder ausgebildet ist. Die beiden Anker sind koaxial zueinander angeordnet, wobei der zylindrische Anker in dem hohlzylindrischen Anker steckt.

Bei magnetischer Erregung des Magnetkreises durchfließen die Flusslinien zum Teil den äußeren und zum Teil den inneren Anker, wodurch beide Anker angezogen und somit beide Ventilverschlussglieder in Offenstellung bewegt werden. Diese Anordnung ist jedoch hinsichtlich der Dimensionierung etwas kritisch, denn es muss sichergestellt werden, dass der innere Anker einen ausreichenden Magnetfluss erhält. Dies erfordert eine relativ starke magnetische Erregung des Magnetkreises und demensprechend dimensionierte Spulen und Ansteuerschaltungen.

Aus der EP 1 084 357 B1 ist eine Doppelsitzventilanordnung bekannt geworden, bei der die Integration oder Vereinigung der beiden Ventile noch weiter fortgeschritten ist. Beiden Ventilverschlussgliedern ist ein gemeinsamer Ventilsitz zugeordnet. Die Ventilverschlussglieder sind konzentrisch zueinander angeordnet. Lediglich das innere ist mit einem Magnetanker verbunden, während das äußere Ventilverschlussglied mit einer nicht magnetischen, den Anker umgebenden Hülse verbunden ist.

Während sich mit dieser Anordnung auf einfache Weise mit einer einzigen Spule zwei Ventilverschlussglieder ansteuern lassen bringt diese Anordnung doch einen relativ hohen Streufluss mit sich, weil die nicht magnetische Hülse den inneren Anker vollständig umgibt.

Die elektrische Ansteuerung von Magnetventilen ist ein erheblicher Kostenfaktor. Es ist das Ziel mit möglichst kleinen Spulen, d.h. geringen Kupfermengen und mit geringen Ansteuerströmen, insbesondere mit geringen Halteströmen auszukommen. Andererseits muss aber das Schließen eines Ventils beim Abschalten des Stroms oder beim Ausfall desselben sichergestellt sein.

Davon ausgehend ist es Aufgabe der Erfindung, eine einfach aufgebaute, zuverlässige und mit geringen Strömen anzusteuernde magnetisch betätigte Ventilanordnung zu schaffen.

Diese Aufgabe wird mit der Ventilanordnung nach Anspruch 1 gelöst:

Die erfindungsgemäße Ventilanordnung weist zwei Ventilverschlussglieder auf, die durch Erregung einer einzigen Magnetspule in Offenstellung zu überführen sind. Beiden Ventilverschlussgliedern ist jeweils ein Anker zugeordnet, wobei die beiden Anker vorzugsweise axial hintereinander angeordnet sind. Zu der Magnetspule gehört ein äußerer Magnetkreis mit zwei Polstücken. Das obere Polstück ist dem oberen Anker und das untere Polstück dem unteren Anker zugeordnet. Zwischen beiden Ankern ist ein Arbeitsluftspalt ausgebildet. Außerdem bildet der obere Anker mit dem oberen Polstück einen Arbeitsluftspalt. Durch diese Maßnahme wird sichergestellt, dass bei Erregung der Magnetspule der sich einstellende Magnetfluss beide Anker nacheinander durchfließt, wodurch die Anker einerseits zueinander gezogen und andererseits beide Anker insgesamt nach oben, d.h. in Bezug auf die Ventilverschlussglieder in Öffnungsrichtung bewegt werden. Fällt die Erregung hingegen weg, können beide Ventilverschlussglieder voneinander unabhängig schließen. Klemmt der obere Anker in Offenstellung kann der untere (innere) Anker noch immer in Schließstellung überführt werden. Klemmt hingegen der innere (untere) Anker kann der obere Anker und sein Ventilverschlussglied ohne weiteres in Schließstellung überführt werden.

Durch die besondere Ausbildung des Magnetkreises, der eine Reihendurchflutung beider Anker sicherstellt, wird eine gute Ausnutzung der von der Spule aufgebrachten magnetischen Durchflutung erzielt. Sowohl zum Ansteuern als auch zum Offenhalten der Ventile sind lediglich relativ geringe Ströme erforderlich. Der Magnetkreis erzeugt nur geringe Streuflüsse. Der zwischen dem ersten (oberen) Anker und dem ersten (oberen) Polstück definierte Arbeitsluftspalt kann in erregter Stellung eine minimale Spaltweite mit geringem Streufluss annehmen. Gleiches gilt für den zwischen den Ankern ausgebildeten Kupplungsluftspalt. Es ist deshalb möglich, mit einer elektrischen und magnetischen Erregung auszukommen, die nicht größer ist als bei einem Einzelventil.

Der erste (obere) Anker ist über ein Rohrstück mit dem zugeordneten Ventilverschlussglied verbunden. Das Rohrstück kann ein dünnwandiges Edelstahlrohr, ein dünnwandiges Messingrohr, auch ein dünnwandiges Kunststoffrohr oder dergleichen sein. Das Rohrstück ist nicht magnetisch. Es ist jedoch auch möglich, ein ferromagnetisches Material zu verwenden. In diesem Fall wird die Wandstärke dann aber so gering gewählt, dass der magnetische Widerstand in Axialrichtung so groß ist, dass kein nennenswerter magnetischer Kurzschluss zu dem zwischen den beiden Ankern ausgebildeten Arbeits- bzw. Kupplungsluftspalt entsteht.

Die Ausbildung der Verbindungshülse oder des Rohrabschnitts zwischen dem äußeren Ventilverschlussglied und dem ersten Anker aus einem nicht magnetischen, von dem Material des ersten Ankers verschiedenen Material, erfordert die mechanische gasdichte Verbindung zwischen dem Rohrstück bzw. der Hülse und dem ersten Anker auf geeignete Weise. Die Verbindung kann beispielsweise durch Laserschweißen, Elektronenstrahlschweißen, Kleben, Schrauben, Bördeln oder ähnliches erfolgen. Eine Bördelverbindung lässt sich, verbunden mit einer entsprechenden Elastomerdichtung, beispielsweise einem O-Ring, prozesssicher und kostengünstig herstellen.

Die Ausbildung der Verbindungshülse aus Ankermaterial, d.h. magnetischem Material hat hingegen den Vorteil, dass eine einstückige Verbindung zwischen dem Anker und der Hülse vorgesehen werden kann, so dass keinerlei Dichtheitsprobleme auftreten.

Die Hülse durchsetzt den Übertragungsluftspalt, der zwischen dem zweiten Polstück und dem zweiten Anker ausgebildet ist, wobei dieser Übertragungsluftspalt vorzugsweise axial länger ist als der Axialhub des zweiten Ankers. Dadurch entstehen in dem Übertragungsluftspalt keine den Anker axial bewegenden Kräfte. Der Übertragungsluftspalt kann jedoch unterstützend zum Ankerantrieb herangezogen werden. Dies gelingt, indem der zweite Anker, wenn das zugeordnete Ventilverschlussglied auf seinem Ventilsitz aufsitzt, aus dem entsprechenden Polstück herausragt, so dass sich die Fläche des Übertragungsluftspalts beim Öffnen des entsprechenden Ventils vergrößert.

Der zweite Anker kann durch entsprechende Zentriermittel, wie beispielsweise Gleitringe, in der Hülse oder dem Rohrstück geführt und gelagert sein. Entsprechend kann die Hülse bzw. das Rohrstück durch Zentriermittel, wie beispielsweise Gleitringe in dem zweiten Polstück gelagert sein. Der erste Anker kann hingegen bedarfsweise in dem ersten Polstück zentriert gelagert sein. Auch hier können Gleitringe eine Führung und Beweglichkeit des Ankers sicherstellen.

Weitere Einzelheiten vorteilhafter Ausführungsformen der Erfindung sind Gegenstand der Zeichnung, der Beschreibung oder von Ansprüchen.

In der Zeichnung sind Ausführungsbeispiele der Erfindung veranschaulicht. Es zeigen:
- Figur 1: eine erste Ausführungsform der erfindungsgemäßen Ventilanordnung in längs geschnittener, schematisierter Darstellung in Schließstellung,
- Figur 2: die Ventilanordnung nach Figur 1 in längs geschnittener, schematisierter Darstellung in Offenstellung,
- Figur 3: die Ventilanordnung nach Figur 1 in längs geschnittener, schematisierter Darstellung in Geschlossenstellung mit klemmendem zweiten Anker,
- Figur 4: die Ventilanordnung nach Figur 1 in Geschlossenstellung mit klemmendem ersten Anker,
- Figur 5: eine abgewandelte Ausführungsform der Ventilanordnung in längs geschnittener, schematisierter Darstellung in Geschlossenstellung,
- Figur 6: eine weiter abgewandelte Ausführungsform der Ventilanordnung nach Figur 1 in längs geschnittener, schematisierter Darstellung in Geschlossenstellung und
- Figur 7: eine weitere Ausführungsform einer zu der Ventilanordnung gehörigen Antriebseinrichtung in längs geschnittener Darstellung in Offenstellung.

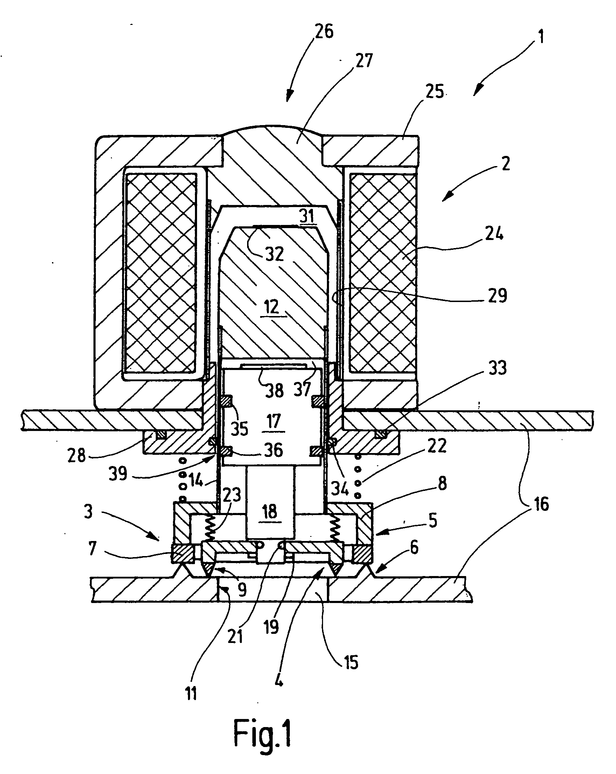

In Figur 1 ist eine Ventilanordnung 1 veranschaulicht, zu der ein Magnetantrieb 2 und zwei Ventile 3, 4 gehören. Das Ventil 3 wird durch ein Ventilverschlussglied 5 und einen Ventilsitz 6 gebildet. Das Ventilverschlussglied 5 weist einen ringförmigen, beispielsweise durch ein Elastomer gebildeten, Dichtungskörper 7 auf, der an einer ringförmigen Stirnfläche eines hohlzylindrischen, oben geschlossenen etwa becher- oder glockenförmigen Körper 8 gehalten ist.

Zu dem Ventil 4 gehört ein Ventilverschlussglied 9 und ein Ventilsitz 11. Die Ventilsitze 6, 11 können, wie in Figur 1 veranschaulicht ist, baulich miteinander vereinigt sein, indem beispielsweise der Ventilsitz 6 als eine ringförmige Rippe ausgebildet ist, die den als ringförmige Planfläche ausgebildeten Ventilsitz 11 konzentrisch umgibt. Es ist jedoch auch möglich, beide Ventilsitze 6, 11 voneinander getrennt in gleicher oder in unterschiedlicher Ebene anzuordnen. In beiden Fällen sind sie jedoch vorzugsweise zueinander koaxial angeordnet.

Dem Ventilverschlussglied 3 ist ein erster Anker 12 zugeordnet, der durch einen etwa zylindrischen ferromagnetischen Körper, beispielsweise einen Eisenkörper gebildet ist. Der Anker 12 ist mit dem Körper 8 über eine Hülse 14 verbunden, wobei die Verbindung zwischen der Hülse 14 und dem Anker 12 vorzugsweise starr und gasdicht ausgebildet ist. Besteht die Hülse 14 beispielsweise aus Edelstahl oder einem anderweitigen, nicht wesentlich magnetisierbaren Material, werden Bördelverbindungen, Klebeverbindungen oder Laserschweißverbindungen bevorzugt. Die Verbindung zwischen der Hülse 14 und dem Körper 8 ist axial fest, wobei vorzugsweise jedoch eine gewisse Schwenkbeweglichkeit zum Spielausgleich gegeben ist. Entsprechende Verbindungsmaßnahmen mit Halteringen und Dichtungselementen sind bekannt und beispielsweise der EP 0 757 200 B1 zu entnehmen. Der Anker 12, die Hülse 14, der Körper 8 und der Dichtungskörper 7 sind gasdicht. Sitzt der Dichtungskörper 7 auf dem Ventilsitz 6 auf, kann kein Gas durch die von dem Ventilsitz 6 bzw. 11 umgebene Öffnung 15 eines nicht weiter veranschaulichten Ventilgehäuses 16 bzw. seiner Zwischenwand gelangen und zwar unabhängig davon, ob das Ventilverschlussglied 9 in Offen- oder Schließstellung steht.

Dem Ventilverschlussglied 9 ist ein zweiter Anker 17 zugeordnet, der beispielsweise im Wesentlichen zylindrisch ausgebildet und innerhalb der Hülse 14 axial beweglich angeordnet ist. Der Anker 17 ist mit dem Ventilverschlussglied 9 über eine Ventilspindel 18 verbunden, wobei die Verbindung axial fest ist, dabei aber vorzugsweise eine gewisse Schwenkbeweglichkeit zulässt. Ein entsprechender Haltering 19 und ein Dichtungsring 21 deuten diese Verbindung in Figur 1 schematisch an.

Beide Ventilverschlussglieder 5, 9 sind in Schließrichtung vorgespannt. Dazu dienen entsprechende Schließfedern 22, 23 die beispielsweise als Schraubenfedern ausgebildet und konzentrisch zu den Ventilverschlussgliedern 5, 9 angeordnet sind. Während sich die Schließfeder 22 an dem Ventilgehäuse 16 abstützen kann, stützt sich die Schließfeder 23 beispielsweise zwischen den Ventilverschlussgliedern 5, 9 ab.

Zu dem Magnetantrieb 2 gehören eine Magnetspule 24, ein Joch 25 und eine Magnetschlusshülse 26, zu der wiederum ein erstes oder oberes Polstück 27, ein zweites oder unteres Polstück 28 und eine beide Polstücke 27, 28 gasdicht miteinander verbindende Hülse 29 gehören. Die Hülse 29 ist vorzugsweise aus einem nicht magnetischen Material oder aus Edelstahl ausgebildet. Sie ist mit rohrflanschähnlichen Enden der jeweiligen Polstücke 27, 28 verschweißt, verklebt oder anderweitig gasdicht verbunden.

Das obere Polstück 27 sitzt in dem Joch 25, das die Spule 24 außen umgreift und bildet mit der oberen Stirnfläche des Ankers 12 einen Arbeitsluftspalt 31. Dieser ist etwa scheibenförmig. Die entsprechenden Begrenzungsflächen des Arbeitsluftspalts 31 sind die dem Anker 12 zugewandte Stirnfläche des Jochs 27, die vorzugsweise als ebene Fläche ausgebildet ist, sowie die obere Stirnfläche des Ankers 12, die ebenfalls vorzugsweise eben ist. Auf der Stirnfläche des Ankers 12 kann eine dünne Antiklebscheibe 32, beispielsweise in Form einer Kunststoffscheibe oder einer Messingscheibe angeordnet sein. Im Übrigen kann der Anker 12 oben kegelstumpfförmig oder konisch ausgebildet sein, wobei die Innenkontur des Polstücks 27 entsprechend angepasst sein kann. Dies kann der Erhöhung der Anzugskraft des Ankers 12 dienen.

Das untere Polstück 28 ist vorzugsweise in Form einer magnetischen Hülse ausgebildet, die in einer entsprechenden Ausnehmung des Jochs 25, d.h. eines unteren, die Spule 24 untergreifenden Schenkels desselben sitzt. Außerdem kann das Polstück 28 mit einem Radialflansch versehen sein, der von innen her an dem Ventilgehäuse 26 anliegt und mittels eines Dichtungselements, beispielsweise eines O-Rings 33, an diesem abdichtet. Der Radialflansch des Polstücks 28 kann an die Innenseite des Ventilgehäuses 16 angedrückt sein, wenn die Magnetschlusshülse 26 einen entsprechenden, nach auswärts (oben) gerichteten Zug erhält. Dieser Zug kann an dem Polstück 27 über das Joch 25 in die Magnetschlusshülse 26 eingeleitet werden.

Zur axial beweglichen Lagerung der Hülse 14 und des mit ihr verbundenen Ankers 12 kann das Polstück 28 innen mit einem Gleitring 34 versehen sein, der in einer radial nach innen offenen Nut des Polstücks 28 sitzt. Der Gleitring stellt sicher, dass die Hülse 29 die innere Wandung des Polstücks 28 nicht berührt.

Entsprechend kann der Anker 17, der in der Hülse 14 axial beweglich gelagert ist, an seinem Außenumfang ein oder mehrere Gleitringe 35, 36 aufweisen, die in entsprechenden ringförmigen Umfangsnuten sitzen. Die Gleitringe 34, 35, 36 sind beispielsweise Teflonringe oder ähnliches.

Der Anker 12 begrenzt mit seiner unteren Stirnfläche einen Kupplungsluftspalt 37, der nach unten hin durch die obere Stirnfläche des Ankers 17 begrenzt ist. Dieser scheibenförmige, vorzugsweise durch Planflächen begrenzte Kupplungsluftspalt 37 ist im Ruhezustand vorzugsweise deutlich kleiner als der Arbeitsluftspalt 31. An der unteren Stirnseite des Ankers 12 oder an der oberen Stirnseite des Ankers 17 kann eine Antiklebscheibe 38 angeordnet sein.

Der Anker 17 bildet mit dem Polstück 28 einen Übertragungsluftspalt 39, der zwischen der zylindrischen Außenumfangsfläche des Ankers 17 und der zylindrischen Innenumfangsfläche des Polstücks 28 definiert ist und durch den sich die Hülse 14 erstreckt. Die axiale Länge des Polstücks 28 ist vorzugsweise etwas größer als die des Ankers 17, wobei der Anker 17 in Ruheposition vorzugsweise etwas nach unten aus dem Polstück 28 herausragt.

Die insoweit beschriebene Ventilanordnung 1 arbeitet wie folgt:

Im stromlosen Zustand erzeugt die Magnetspule 24 kein Magnetfeld. Die Schließfeder 23 drückt das Ventilverschlussglied 9 auf seinen Ventilsitz 11, so dass die Öffnung 15 geschlossen ist. Die Schließfeder 23 stützt sich dabei mit einem Ende an dem Ventilverschlussglied 9 und mit ihrem anderen Ende an dem Körper 8 ab. Gleichzeitig drückt die stärker ausgebildete Schließfeder 22 den Körper 8 von dem Polstück 28 weg, wodurch der Dichtungskörper 7 auf dem Ventilsitz 6 ruht. Der oberhalb der Ventilsitze 6, 11 ausgebildete Gasraum ist somit doppelt verschlossen - zum einen durch das Ventilverschlussglied 9 und zum anderen durch das Ventilverschlussglied 5. Letzteres bildet mit der Hülse 14 und dem Anker 12 eine hermetisch geschlossene Einheit.

Nach außen hin ist der Gasraum durch die Magnetschlusshülse 26 hermetisch abgedichtet, auf die das Joch 25 und die Spule 24 aufgeschoben sind. Die Magnetschlusshülse 26 ist ein dreiteiliges Bauteil, das lediglich an den beiden Verbindungsstellen zwischen der Hülse 29 und den Polstücken 27, 28 mechanische Verbindungen aufweist, bei deren Herstellung Gasdichtigkeit zu erzielen ist.

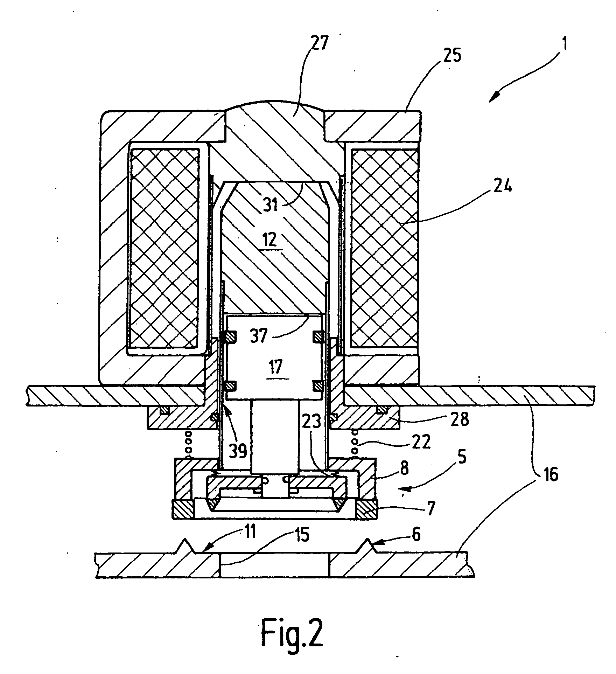

Zum Öffnen der Ventilanordnung 1 wird die Spule 24 bestromt. Es stellt sich der in Figur 2 veranschaulichte Zustand ein. Der Magnetfluss durchsetzt den Übertragungsluftspalt 39 und gelangt so von dem Polstück 28 in den Anker 17. Außerdem durchsetzt er den Luftspalt 37, wodurch eine Anziehungskraft zwischen den Ankern 12, 17 aufgebaut wird. Diese Anziehungskraft bewirkt das Abheben des Ventilverschlussglieds 5 von dem Ventilsitz 6 gegen die Kraft der Schließfeder 23, die somit zusammengedrückt wird. Des Weiteren durchsetzt der Magnetfluss den Arbeitsluftspalt 31 zwischen dem Polstück 27 und dem Anker 12. Es werden deshalb die magnetisch zusammen gezogenen Anker 12, 17 beide gegen die Kraft der Schließfeder 22 nach oben von den Ventilsitzen 6, 11 weg bewegt, so dass die Ventilanordnung 1 die in Figur 2 veranschaulichte Position einnimmt. Die Öffnung 15 ist offen. Aufgrund der Vereinigung der Ventilsitze 6, 11 entsteht lediglich ein sehr geringer Durchströmungswiderstand.

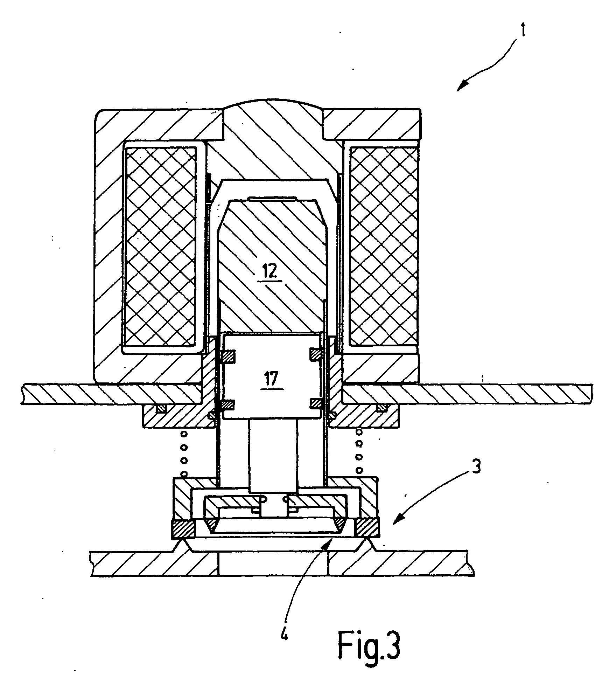

Bei ordnungsgemäßem Betrieb fallen beide Anker 12, 17 sofort in ihre in Figur 1 veranschaulichte Schließposition zurück, wenn die Spule 24 entregt wird. Treten jedoch Fehler auf, beispielsweise indem der Anker 17 an dem Anker 12 kleben bleibt, beispielsweise in Folge von Verschmutzungen oder anderen Fehlereinflüssen, schließt die Ventilanordnung 1 dennoch. Dies ist in Figur 3 veranschaulicht. Zwar steht das innere Ventil 4 noch offen, jedoch hat das äußere Ventil 3 geschlossen.

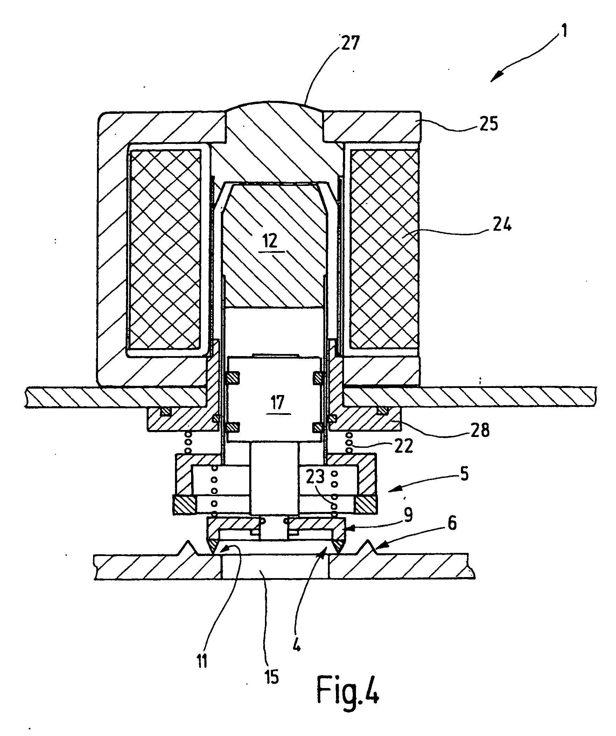

Im umgekehrten Fehlerfalle, wenn beispielsweise der Anker 12 und das mit ihm verbundene Ventilverschlussglied 5 schwergängig sind und in Offenstellung hängen bleiben, kann dennoch das Ventil 4 schließen, wie es in Figur 4 veranschaulicht ist.

Der Kupplungsluftspalt 37 bildet eine zwischen den Ankern 12, 17 wirksame Magnetkupplung, der die Anker 12, 17 zu einer Einheit verbindet, so lange die Spule 24 bestromt ist. Die Anker 12, 17 bewegen sich dann gemeinsam in Offenstellung. Dies wird erreicht, indem der Arbeitsluftspalt 37 deutlich enger eingestellt wird als der Arbeitsluftspalt 31. Der Maximalhub des Ankers 17 innerhalb der Hülse 14 ist gegeben, wenn der Anker 12 in Anzugsposition ist und er ist mindestens so groß wie der von dem Ventilverschlussglied 5 zu durchlaufende gesamte Weg zwischen Öffnungsposition und Schließposition. Dadurch kann das Ventil 4 ungehindert schließen, wenn das Ventil 3 klemmt.

Bei einer abgewandelten Ausführungsform ist die Hülse 14 durch einen Becher ersetzt, dessen Boden den Arbeitsluftspalt 31 durchsetzt. Das Polstück 27 ist dann außenseitig auf den Boden des Bechers aufgesetzt. Der Boden des Bechers kann dann die Funktion der Antiklebscheibe 32 übernehmen. Der Vorteil dieser Ausführungsform liegt darin, dass lediglich noch die Verbindung zwischen dem Rand des Bechers und dem Polstück 28 gasdicht hergestellt werden muss.

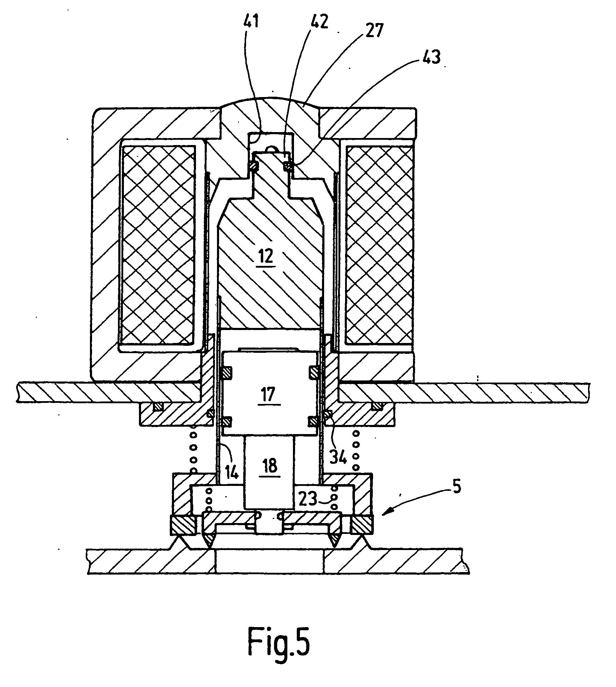

Eine weitere Abwandlung veranschaulicht Figur 5. Diese besteht darin, dass die aus dem Anker 12 und der Hülse 14 gebildete Einheit nicht nur durch den Gleitring 34 sondern zusätzlich am oberen Ende des Ankers 12, beispielsweise durch einen sich in eine Öffnung 41 des Polstücks 27 hinein erstreckenden Zapfen 42 geführt und gelagert ist. Der beispielsweise zylindrische Zapfen kann eine Umfangsnut mit einem darin eingesetzten Gleitring 43 aufweisen. Alternativ kann der Zapfen einen polygonalen Querschnitt aufweisen und an seinen Kanten mit Gleitelementen versehen sein. Der Vorzug dieser Ausführungsform liegt in der guten Führung des Ventilverschlussglieds 5.

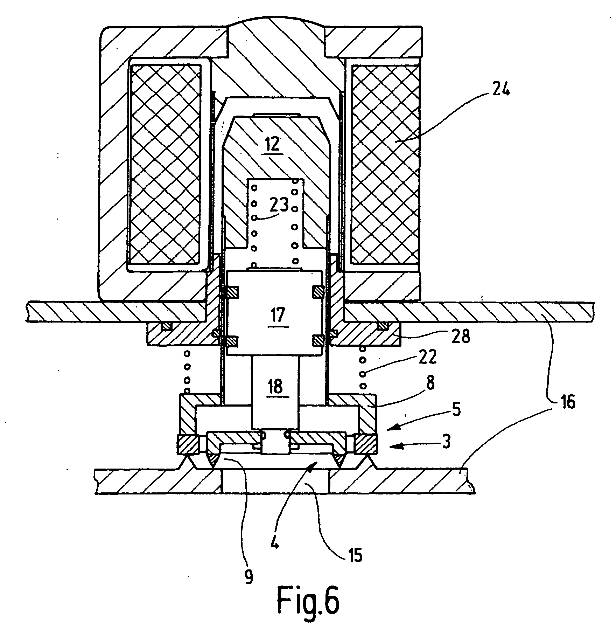

Eine weitere Abwandlung veranschaulicht Figur 6. Das Wesen dieser Abwandlung besteht in der Anordnung der Schließfeder 23, die abweichend von den vorstehend beschriebenen Ausführungsbeispielen zwischen den Ankern 12, 17 angeordnet ist. Dazu kann der Anker 12 und/oder der Anker 17 mit einer Ausnehmung versehen sein, beispielsweise in Form einer zentrischen Sackbohrung, die die Schließfeder 23 ganz oder teilweise aufnimmt. Der Vorzug dieser Ausführungsform liegt darin, dass die komprimierte Schließfeder 23 eine im Vergleich zu der Ausführungsform nach den Figuren 1 bis 4 relativ große Länge zur Verfügung hat, was die Bemessung und Herstellung der Schließfeder 23 erleichtert.

Bei einer weiteren, nicht veranschaulichten Ausführungsform ist die Schließfeder 23 durch eine die Öffnung 15 durchsetzende, an dem Ventilverschlussglied 9 oder der Ventilspindel 18 angreifende Zugfeder gebildet, die unterhalb der Öffnung 15 an einer geeigneten Befestigungseinrichtung aufgehängt ist. Dies ist jedoch nur möglich, wenn die Öffnung 15 frei ist. Bei einigen Ausführungsformen kann es vorteilhaft sein, in der Öffnung 15 ein Regulierglied, beispielsweise für einen Strömungsregler, einen Druckregler oder ein Modulationsventil einzubauen. In einer weiteren Abwandlung der vorliegenden Erfindung kann die Schließfeder 23 auch durch nicht mechanische Elemente, wie beispielsweise sich magnetisch abstoßende Elemente gebildet sein. Beispielsweise können solche Elemente einerseits an der Oberseite, d.h. der der Öffnung 15 abgewandten Seite des Ventilverschlussglieds 9 und andererseits an der Unterseite, d.h. der der Öffnung 15 zugewandten Seite des Polstücks 28 angeordnet sein. Ist beispielsweise auf dem Ventilverschlussglied 9 ein Ring aus magnetisch polarisierbarem Material angeordnet, dessen Nordpole an der Oberseite liegen und ist an der Unterseite des Polstücks 28 ein magnetisch polarisierter Ring angeordnet, dessen Nordpole an der Unterseite liegen und besteht der Körper 8 aus einem magnetischen, nicht abschirmenden Material, wie beispielsweise Aluminium, wirkt unabhängig von der Bestromung der Magnetspule 24 eine Schließkraft auf das Ventilverschlussglied 9. Diese Schließkraft ersetzt die Schließfeder 23. Die Polarisierung der beiden genannten Ringe kann auch umgekehrt werden, womit der gleiche Effekt erzielt wird. Die Ausführungsform mit magnetischer Schließung des inneren Ventils 4 hat Vorteile durch die besonders einfache Montage. Außerdem wird die Schließkraft des Ventils 4 nicht an dem Ventilverschlussglied 5 des Ventils 3 sondern unmittelbar an dem Ventilgehäuse 16 abgestützt.

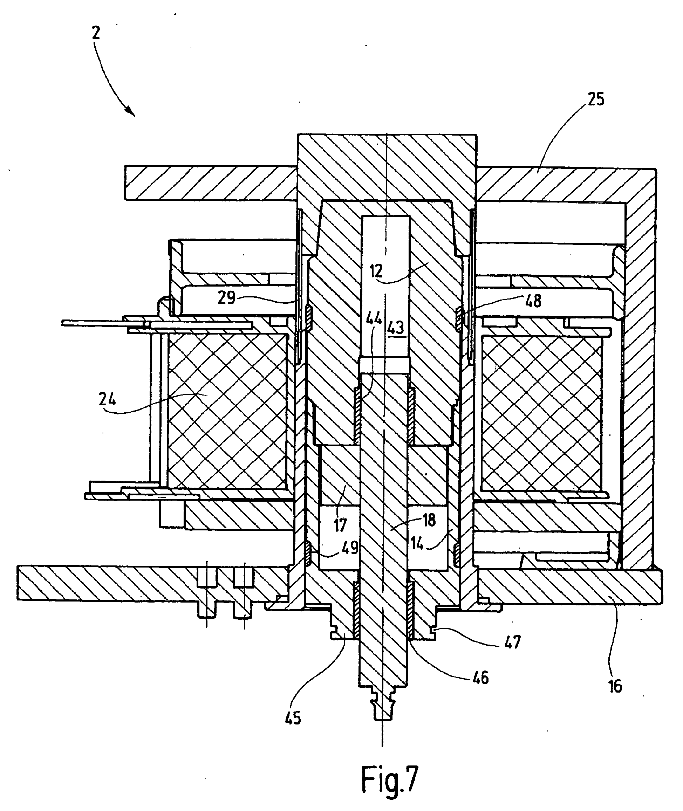

In Figur 7 ist eine abgewandelte Ausführungsform des Magnetantriebs 2 veranschaulicht. Soweit prinzipielle Übereinstimmung mit den vorbeschriebenen Ausführungsformen besteht, wird unter Zugrundelegung gleicher Bezugszeichen auf die vorstehende Beschreibung verwiesen.

Die Besonderheit des Magnetantriebs 2 gemäß Figur 7 liegt in der Ausbildung seiner Anker 12, 17. Der Anker 17 ist hohlzylindrisch ausgebildet. Er sitzt im Presssitz oder anderweitig befestigt auf der Ventilspindel 18. Diese ragt über seine obere Stirnfläche hinaus und greift in eine Sackbohrung 43, die in dem oberen Anker 12 zentrisch ausgebildet ist. Die Sackbohrung 43 kann als Führungsöffnung für das obere Ende der Ventilspindel 18 dienen. Außerdem kann sie eine Druckfeder aufnehmen, die die Tendenz hat, die Anker 12, 17 voneinander weg zu bewegen. Die Ventilspindel 18 kann somit an ihrem oberen Ende in dem Anker 12 geführt sein. Dies gilt insbesondere wenn das obere die obere Stirnfläche des Ankers 17 überragende Ende der Ventilspindel 18 länger ist als die maximale Relativbewegung der beiden Anker 12, 17 gegeneinander. Zur Führung kann eine Gleitbüchse 44 vorgesehen sein, die beispielsweise aus einem reibungsmindernden Kunststoff ausgebildet und an der Wandung der Sackbohrung 43 angeordnet ist.

Zur Führung des unteren Endes der Ventilspindel 18 kann ein Führungsstück 45 dienen, das einen zentralen buchsenartigen Abschnitt aufweist. In diesem ist eine Durchgangsbohrung ausgebildet, in der eine Gleitbüchse 46 angeordnet ist. Das Führungsstück 45 kann mit der Hülse 14 verbunden oder mit dieser einstückig ausgebildet sein. Ein unterer Ansatz des Führungsstücks 45 bildet den Abtrieb des Ankers 12 und ist mit dem nicht weiter veranschaulichten, jedoch entsprechend aus Figur 1 zu entnehmenden, Körper 8 zu verbunden. Dazu kann eine am Umfang ausgebildete Ringnut 47 vorgesehen sein.

Durch die doppelte Radiallagerung bzw. Gleitführung der Ventilspindel 18 an ihrem oberen und an ihrem unteren Ende kann ein besonders enger Luftspalt zwischen dem Anker 17 und der Hülse 14 erreicht werden, der zu einem geringen magnetischen Widerstand führt. Dies erleichtert die Erzielung hoher magnetischer Zugkräfte an dem Anker 17 bei gleichzeitig geringer Dimensionierung der Magnetspule 24.

Auch die Hülse 14 ist vorzugsweise doppelt geführt. Dazu kann der Anker 12 an seinem zylindrischen Außenumfang mit einer eingestochenen Ringnut versehen sein, in der ein Gleitring 48 angeordnet ist. Dieser besteht vorzugsweise aus einem Kunststoff, der zu der Hülse 29 eine geringe Reibung aufbaut. Der Gleitring 48 ragt etwas über die Außenumfangsfläche des Ankers 12 vor und sitzt mit geringem Spiel in der Hülse 29. Dadurch ist die aus dem Anker 12 und der Hülse 14 gebildete Einheit an ihrem oberen Ende axial geführt. Zur axialen Führung dieser Einheit an ihrem unteren Ende ist in der äußeren Mantelfläche der Hülse 14 vorzugsweise ebenfalls eine Ringnut vorgesehen, in der ein weiterer Gleitring 49 angeordnet ist. Dieser steht über die Mantelfläche der Hülse 14 etwas vor und sitzt mit geringem Spiel in der Hülse 29. Er besteht vorzugsweise aus Kunststoff und bildet ein axiales Gleitlager.

Mit dem Spiel des Kolbens 17 in der Hülse 14 kann die maximale Relativgeschwindigkeit der beiden Anker 12, 17 gegeneinander fest gelegt werden. Hier können pneumatische Dämpfungseffekte bewusst ausgenutzt und bedarfsweise auch durch Axialbohrungen durch den Kolben 17 vermieden werden.

Eine Ventilanordnung 1 weist zwei Ventile 3, 4 und einen einzigen Magnetantrieb 2 mit lediglich einer Magnetspule 24 auf, die beide Ventile 3, 4 steuert. Zu dem entsprechenden Magnetkreis gehört ein Joch 25 mit nur zwei Pclstücken 27, 28. Die Ventile 3, 4 sind konzentrisch zueinander angeordnet. Das Ventilverschlussglied 5 des äußeren Ventils 3 ist mit einer Hülse 14 mit einem Anker 12 verbunden. Der so gebildete Becher nimmt den Anker 17 auf, der mit dem Ventilverschlussglied 9 des inneren Ventils 4 verbunden ist. Das Polstück 28 bildet mit dem Anker 17 einen Übertragungsluftspalt, durch den sich die Hülse 14 erstreckt. Zwischen den Ankern 12, 17 ist ein Kupplungsluftspalt 37 ausgebildet. Der Anker 12 bildet mit dem Polstück 27 einen Arbeitsluftspalt. Die Ventile 3, 4 werden gemeinsam geöffnet und können unabhängig voneinander schließen, wenn die Spule 24 stromlos wird.

## Patentansprüche

1. Ventilanordnung (1), insbesondere für Gasanwendungen,
mit einem ersten gegen einen Ventilsitz (6) bewegbaren Ventilverschlussglied (5), das mit einem ersten Magnetanker (12) verbunden ist,
mit einem zweiten gegen einen Ventilsitz (11) bewegbaren Ventilverschlussglied (9), das mit einem zweiten Magnetanker (17) verbunden ist,
mit einer beiden Magnetankern (12, 17) gemeinsam zugeordneten Magnetspule (24), die von einem äußeren Joch (25, 27, 28) umgeben ist, das zwei Polstücke (27, 28) aufweist,
wobei der erste Anker (12) mit dem ihm zugeordneten Ventilverschlussglied (5) über einen Rohrabschnitt (14) verbunden ist, **dadurch gekennzeichnet, dass**
der Rohrabschnitt (14) aus nichtmagnetischem Material besteht, und
dass eines der Polstücke (27) dem ersten Anker (12) und das andere der Polstücke (28) dem zweiten Anker (17) zugeordnet ist.

2. Ventilanordnung nach Anspruch 1, **dadurch gekennzeichnet, dass** der erste Anker (12) mit dem zweiten Anker (17) einen Kupplungsluftspalt (37) festlegt.

3. Ventilanordnung nach Anspruch 1, **dadurch gekennzeichnet, dass** der erste Anker (12) mit dem ihm zugeordneten Polstück (27) einen Arbeitsluftspalt (31) festlegt.

4. Ventilanordnung nach Anspruch 1, **dadurch gekennzeichnet, dass** der zweite Anker (17) mit dem ihm zugeordneten Polstück (28) einen Übertragungsluftspalt (39) festlegt.

5. Ventilanordnung nach Anspruch 3 und 4, **dadurch gekennzeichnet, dass** der Rohrabschnitt (14) den Übertragungsluftspalt (39) durchsetzt.

6. Ventilanordnung nach Anspruch 1, **dadurch gekennzeichnet, dass** der Rohrabschnitt (14) aus einem Metall besteht.

7. Ventilanordnung nach Anspruch 1, **dadurch gekennzeichnet, dass** der Rohrabschnitt (14) aus Kunststoff besteht.

8. Ventilanordnung nach Anspruch 1, **dadurch gekennzeichnet, dass** der Rohrabschnitt (14) aus ferromagnetischem Material besteht, wobei seine Wandstärke so gering und damit sein magnetischer Widerstand in Axialrichtung so groß ist, dass der überwiegende Teil des von der Magnetspule ausgehenden magnetischen Flusses nacheinander durch beide Anker (12, 17) verläuft.

9. Ventilanordnung nach Anspruch 4, **dadurch gekennzeichnet, dass** der Übertragungsluftspalt (39) zylindrisch ausgebildet ist.

10. Ventilanordnung nach Anspruch 6, **dadurch gekennzeichnet, dass** die axiale Länge des Übertragungsluftspalts (39) größer ist als der Axialhub des zweiten Magnetankers (17).

11. Ventilanordnung nach Anspruch 1, **dadurch gekennzeichnet, dass** der Rohrabschnitt (14) durch ein Zentriermittel (34) in dem Polstück (28) gelagert ist, das dem zweiten Anker (17) zugeordnet ist.

12. Ventilanordnung nach Anspruch 1, **dadurch gekennzeichnet, dass** der zweite Anker (17) durch ein Zentriermittel (35, 36) in dem Rohrstück (14) gelagert ist.

13. Ventilanordnung nach Anspruch 11 oder 12, **dadurch gekennzeichnet, dass** das Zentriermittel (34, 35, 36) durch wenigstens einen Gleitring gebildet ist.

## Claims

1. Valve arrangement (1), in particular for gas applications,
with a first valve closing member (5), which is movable against a valve seat (6) and is connected to a first armature (12),
with a second valve closing member (9), which is movable against a valve seat (11) and is connected to a second armature (17),
with a magnet coil (24), which is associated jointly with the two armatures (12, 17) and is surrounded by an outer yoke (25, 27, 28) having two pole sections (27, 28),
wherein the first armature (12) is connected to the valve closing member (5) associated with it via a tube section (14),
**characterised in that**
the tube section (14) is composed of non-magnetic material, and
that one of the pole sections (27) is associated with the first armature (12) and the other pole section (28) is associated with the second armature (17).

2. Valve arrangement according to Claim 1, **characterised in that** the first armature (12) defines a coupling air gap (37) with the second armature (17).

3. Valve arrangement according to Claim 1, **characterised in that** the first armature (12) defines an operation air gap (31) with the pole section (27) associated with it.

4. Valve arrangement according to Claim 1, **characterised in that** the second armature (17) defines a transfer air gap (39) with the pole section (28) associated with it.

5. Valve arrangement according to Claim 3 and 4, **characterised in that** the tube section (14) passes through the transfer air gap (39).

6. Valve arrangement according to Claim 1, **characterised in that** the tube section
(14) is composed of a metal.

7. Valve arrangement according to Claim 1, **characterised in that** the tube section (14) is composed of plastic.

8. Valve arrangement according to Claim 1, **characterised in that** the tube section (14) is composed of ferromagnetic material, wherein its wall thickness is so small and therefore its magnetic resistance in axial direction is so great that the predominant portion of the magnetic flux exiting from the magnet coil runs through the two armatures (12, 17) one after the other.

9. Valve arrangement according to Claim 4, **characterised in that** the transfer air gap (39) is cylindrical.

10. Valve arrangement according to Claim 6, **characterised in that** the axial length of the transfer air gap (39) is greater than the axial stroke of the second armature (17).

11. Valve arrangement according to Claim 1, **characterised in that** the tube section (14) is mounted in the pole section (28) associated with the second armature (17) by means of a centring element (34).

12. Valve arrangement according to Claim 1, **characterised in that** the second armature (17) is mounted in the tube section (14) by means of a centring element (35, 36).

13. Valve arrangement according to Claim 11 or 12, **characterised in that** the centring element (34, 35, 36) is formed by at least one slide ring.

## Revendications

1. Système de vanne magnétique (1), plus particulièrement pour le gaz,
avec un premier organe obturateur (5) mobile par rapport à un premier siège de vanne (6), qui est lié à un induit magnétique (12),
avec un deuxième organe obturateur (9) mobile par rapport à un deuxième siège de vanne (11), qui est lié à un induit magnétique (7),
avec une bobine magnétique (24), qui est associée aux deux induits magnétiques (12, 17) et est entourée par une culasse (25,27, 28) extérieure avec deux pièces polaires (27, 28),
le premier induit (12) étant lié par l'intermédiaire d'un tube (14) à l'organe obturateur de vanne (5) qui lui est associé, **caractérisé par le fait**
**que** le tube (14) est constitué d'un matériau amagnétique et
**que** l'une (27) des pièces polaires est associée au premier induit (12) et l'autre (28) pièce polaire est associée au deuxième induit (17).

2. Système de vanne magnétique selon la revendication 1, **caractérisé par le fait que** le premier induit (12) définit un entrefer de couplage (37) avec le deuxième induit (17).

3. Système de vanne magnétique selon la revendication 1, **caractérisé par le fait que** le premier induit (12) définit un entrefer de travail (31) avec la pièce polaire (27) qui lui est associée.

4. Système de vanne magnétique selon la revendication 1, **caractérisé par le fait que** le deuxième induit (17) définit un entrefer de transmission (39) avec la pièce polaire (28) qui lui est associée.

5. Système de vanne magnétique selon les revendications 3 et 4, **caractérisé par le fait que** le tube (14) traverse l'entrefer de transmission (39).

6. Système de vanne magnétique selon la revendication 1, **caractérisé par le fait que** le tube (14) est en un métal.

7. Système de vanne magnétique selon la revendication 1, **caractérisé par le fait que** le tube (14) est en matière plastique.

8. Système de vanne magnétique selon la revendication 1, **caractérisé par le fait que** le tube (14) est en un matériau ferro-magnétique, son épaisseur de paroi étant suffisamment faible et par suite sa résistance magnétique dans la direction axiale étant suffisamment élevée pour que la majeure partie du flux magnétique sortant de la bobine magnétique traverse l'un après l'autre les deux induits (12, 17).

9. Système de vanne magnétique selon la revendication 4, **caractérisé par le fait que** l'entrefer de transmission (39) est cylindrique.

10. Système de vanne magnétique selon la revendication 6, **caractérisé par le fait que** la longueur axiale de l'entrefer de transmission (39) est supérieure à la course axiale du deuxième induit magnétique (17).

11. Système de vanne magnétique selon la revendication 1, **caractérisé par le fait que** le tube (14) est monté à l'aide d'un moyen de centrage (34) dans la pièce polaire (28) associée au deuxième induit magnétique (17).

12. Système de vanne magnétique selon la revendication 1, **caractérisé par le fait que** le deuxième induit magnétique (17) est monté à l'aide d'un moyen de centrage (35, 36) dans le tube (14).

13. Système de vanne magnétique selon la revendication 11 ou 12, **caractérisé par le fait que** le deuxième moyen de centrage (34, 35, 36) est formé par au moins une bague de glissement.
